(19)

Europäisches
Patentamt

European
Patent Office

Office européen
des brevets

(11)  **EP 3 858 571 A1**

(12)  **EUROPEAN PATENT APPLICATION**

(43) Date of publication:
**04.08.2021 Bulletin 2021/31**

(51) Int Cl.:
***B29B 17/04*** *(2006.01)*

(21) Application number: **20305085.1**

(22) Date of filing: **30.01.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **POLYTECHNYL S.A.S.**
**75009 Paris (FR)**

(72) Inventors:
- **PLOUCHART, Sébastien**
  **69110 Sainte-Foy-lès-Lyon (FR)**
- **NEVORET, Sylvain**
  **69570 Dardilly (FR)**
- **GISBERT, Thierry**
  **69780 Mions (FR)**

(74) Representative: **Chatelan, Florence Anne**
**PolyTechnyl SAS/DOMO**
**Usine de Belle Etoile**
**Avenue Albert Ramboz**
**69190 Saint-Fons (FR)**

(54)  **SUSTAINABLE DRY PROCESS FOR THE SEPARATION AND RECOVERY OF PURE POLYMERS FROM MULTI-MATERIAL SOURCES**

(57)  The present invention relates to process for separating and recovering pure polymers from multi-material sources by using impact pressure waves.

**Description**

**BACKGROUND**

Many technical products are composite objects and comprise two or more different materials. For example, technical textiles are often knitted, woven or nonwoven and composed of thermoplastic fibers for specific applications, such as flame retardancy, mechanical strength, electrical and/or thermal conductivity, or the protection of personnel. They are typically surface-treated with a coating.

Examples of coated technical textiles include airbags, which are inflatable protective bags used for the protection of the occupants of a vehicle. Such articles generally comprise a bag based on polyamide or on polyester, generally in the form of woven fabrics of fibers, or several layers, and a silicone coating on one of the faces. Airbags are widely manufactured by deposition of a silicone composition which can crosslink to form a thin layer of silicone elastomer.

A problem is the recycling of these technical objects, such as coated airbags, due to the incompatibility of the thermoplastic fibers and the polymers used for the coating, such as silicone. This is because it is very difficult to mechanically dissociate the two materials. Their direct reuse without pretreatment results in a poor performance due to the presence of coating, which also adversely affects the surface appearance of the molded parts and often results in severe fouling of the molds during the injection.

In order to overcome these problems, EP 3 501 775 provides a process for recycling technical objects (fabrics) comprising at least two different polymer materials, wherein the materials are separated by centrifugal force. In this process in a first step the object is micronized into particles and subsequently the micronized particles are chemically treated to enhance the separation of the materials. Afterwards the materials are further separated by centrifugal force. The separated particles are washed and dried to obtain polymer particles having a high purity and the recovery yield of the particles is good. However, this process requires a high amount of water and energy due to the washing and drying step of the process. Additionally, the chemical solutions and the waste water of the process have to be managed.

Another approach to separate mixed polymers is the use of a so-called dry triboelectronic technique as described for example in the scientific publication of M.J. Pearse and T.J. Hicky, Resource Recovery and Conservation, 3 (1978), pages 179-190. However, the recovery yield of this method is not sufficient.

Therefore, there is still the need to provide a process for separating and recovering of pure polymers from multi-material sources which overcomes the above-mentioned disadvantages of the prior art.

**SUMMARY OF THE INVENTION**

The inventors of the present application found that the above-mentioned object can be achieved by providing a process for treating an object comprising a first material and a second material bound to the first material, wherein the density of the first material is different from the density of the second material, said process comprising the following steps:

(i) physically treating the object to obtain micronized particles,
(ii) detaching and/or disaggregating the micronized particle obtained in process step (i) from each other into fine particles by subjecting the micronized particles to impact pressure waves and
(iii) physically separating the fine particles obtained in process step (ii) due to their difference in density and/or particle size.

Furthermore, according to the invention it is preferred that the impact pressure waves used in process step (ii) are generated by an apparatus comprising:

a) two disc drives equipped with molded parts and rotating in opposite directions by two motors,
b) a filling orifice, provided close to the center of the apparatus, for the micronized particles to be detached and/or disaggregated, and
c) an outlet for the detached and/or disaggregated fine particles.

The levels of purity and recovery yield of the particles obtained according to the invention are high. The obtained polymer particles can be recompacted, regranulated, recompounded and/or recycled.

**DETAILED DESCRIPTION**

Before the issues of the invention are described in detail, the following should be considered:
As used herein, the singular forms "a", "an", and "the" include both singular and plural referents unless the context clearly dictates otherwise. By way of example, "a particle" means one particle or more than one particle.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

All references cited in the present specification are hereby incorporated by reference in their entirety. In particular, the teachings of all references herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following passages, different alternatives, embodiments and variants of the invention are defined in more detail. Each alternative and embodiment so defined may be combined with any other alternative and embodiment, and this for each variant unless clearly indicated to the contrary or clearly incompatible when the value range of a same parameter is disjoined. In particular, any feature indicated as being preferred or advantageous may be combined with any other feature or features indicated as being preferred or advantageous.

Furthermore, the particular features, structures or characteristics described in present description may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art.

As mentioned-above, the invention refers to a process for treating an object comprising a first material and a second material bound to the first material, wherein the density of the first material is different from the density of the second material, said process comprising the following steps:

(i) physically treating the object to obtain micronized particles,
(ii) detaching and/or disaggregating the micronized particle obtained in process step (i) from each other into fine particles by subjecting the micronized particles to impact pressure waves,
(iii) physically separating the fine particles obtained in process step (ii) due to their difference in density and/or particle size.

According to the invention, the object, which should be treated, is a multi-material composite that comprises at least two different materials, which are bound to each other. The density of the first material is different from the density of the second material. Preferably, the density of the first material (pA) and the density of the second material (pB) are such that they fulfil the following relationship:

$$\frac{2*|\rho A - \rho B|}{(\rho A + \rho B)} > 0.03,$$

wherein pA is the density of the first material (A), and pB is the density of the second material (B).

More preferably, the density of the first material and the density of the second material are such that they fulfil the following relationship:

$$\frac{2*|\rho A - \rho B|}{(\rho A + \rho B)} > 0.04.$$

The technical object typically comprises two different materials. In other embodiments, the technical object to be treated in accordance with the present invention comprises at least three or at least four different materials. In a preferred embodiment, the technical object to be treated substantially consists of two different materials. In other embodiments, the object to be treated substantially consists of three different materials or of four different materials. It is further preferred that the different materials are different polymers.

The technical objects of the invention may be fibers, woven or nonwoven fabrics, extruded or blow-molded articles such as films, sheets and multilayer objects.

Typical textile objects to be treated in accordance with this invention are polyamide/silicone airbags, elasticized polyamide/polyurethane textiles, polyamide or polyester/PTFE textile tissues, polyamide cord fibers rubber compounds from tires, carpets made of polyamide, polypropylene and/or PET fibers on polyvinylchloride (PVC) or polyurethane (PUR) or acrylic support, impermeable textile such as fluoropolymer coated polyamide or polyester etc.

Accordingly, in a preferred embodiment, the first material is a thermoplastic polymer, more preferably, it is a polyamide, such as PA66.

The second material can be composed of a single polymer or of a mixture of polymers, and it can be thermoplastic or thermosetting. The second material is preferably selected from silicones, polyurethanes, fluorinated polymers, rubbers and the like. More preferably, the second material is a silicone, a polyurethane coating, a polyurethane fiber or a fluorinated polymer

In one embodiment of the invention, the first material is preferably mixed with a surface coated or intermingled or co-mingled or interwoven or laminated or co-extruded with the second material.

In another preferred embodiment the first material is a polyamide, and the second material is a polyurethane. In another preferred embodiment the first material is a polyamide, and the second material is polytetrafluoroethylene (PTFE). In a further preferred embodiment, the first material is a polyester, and the second material is PTFE. In another preferred embodiment, the first material is a polyamide cord fiber, and the second material is a rubber.

According to the invention, the object, which should be treated, preferably comprises at least two layers, wherein one layer comprises or consists of the first material and the other layer comprises or consists of the second material. In another embodiment, the object may comprise at least two different components, wherein one component comprises or consists of the first material and the other component comprises or consists of the second material.

Typical extruded or blow-molded multilayer parts are multilayer films for packaging, multilayer pipes and cables, bottles and reservoirs.

The technical objects can be provided from industrial waste during fabrication of parts such as airbags, elasticized fibers, tissues, clothes, films or end-of-life waste, such as "post-consumer" waste. An example can be the airbag fabric (i.e. polyamide fabric coated with silicone) that generates bi-component textile waste during both an airbag fabrication and after the end of life of a vehicle, by recovery of airbags from the vehicles.

In a first step, the process of the present invention comprises physically treating the object to obtain micronized particles. This step of physical treatment is typically a conversion of a technical object into small pieces. It may include cutting the objects into smaller pieces, e.g. by blade-cutting (e.g. by guillotine-type and/or by rotative blades) followed by disaggregation and pulverization by a micronization process such as mechanical scratching and/or fiber shredding, for example with a rotor/stator plus grid micronizer or a rotor/stator air classifier micronizer, or a cryogenic impact mill, or any other equipment available in the state of the art. The term "micronized" as used herein, refers to particles having a main dimension of less than 10 mm. The shape or aspect ratio of the micronized particles is not limited.

The micronized particles obtained by the physical treatment typically have a main dimension between 15 $\mu$m and 5 mm, preferably from 0.1 mm to 2 mm The term "main dimension" as used herein, is synonymous to the median diameter (d50 value). The particle size distribution of the objects can be obtained by laser diffraction measurement, in particular on a particle sizer from Malvern, for example by using the wet route module. All the particles are compared to spheres, without taking into account their aspect ratio in this calculation. The d50 mesh is the dimension such that 50% of the particles are smaller than this dimension and 50% of the particles are larger than this dimension. The laser diffraction particle size analysis can be carried out according to the instructions of the standard AFNOR ISO 13320-1. By way of example, the particle size distribution can be measured according to the following protocol: A Malvern Master Sizer 2000 light diffraction particle sizer equipped with the hydro S module is used, after suspending the sample in ethanol. The measurement conditions are as follows: Stirring in the cell of the particle sizer: 1,400 rev/min; optical model: Fraunhofer; measurement range: from 100 nm to 3,000 $\mu$m.

The population of particles obtained in step (i) typically comprises at least three kinds of particles:

a) particles substantially consisting of the first material, for example separated particles of fibers of thermoplastic polymer alone; these particles typically have a main dimension between 15 $\mu$m and 5 mm, preferably from 0.1 mm to 2 mm

b)particles substantially consisting of the second material, e.g. separated particles of fibers of the second material alone; these particles typically have a main dimension between 15 $\mu$m and 5 mm, preferably from 15 $\mu$m to 2 mm

c) particles comprising both the first material and the second material, e.g. aggregates containing the two polymers still partially linked together; these particles typically have a main dimension between 15 $\mu$m and 5 mm, preferably from 0.1 mm to 2 mm.

The term "substantially consisting of' as used herein means that the particles consists of at least 98.5 % by weight, more preferably of at least 99.5 % by weight, even more preferred of at least 99.8 % by weight, most preferably of 100 % by weight of one of the materials, based on the total weight of the particles.

It is not necessary that there is a complete disaggregation of the first material from the second material in the physical treatment step (i).

In the next method step (ii) of the invention, the micronized particles obtained in method step (i) are detached and/or disaggregated from each other by subjecting the micronized particles to impact pressure waves.

The population of particles obtained in step (ii) typically comprises at least three kinds of particles:

a) particles substantially consisting of the first material, for example separated particles of fibers of thermoplastic polymer alone; these particles typically have a main dimension between 15 μm and 5 mm, preferably from 0.05 mm to 1 mm
b) particles substantially consisting of the second material, e.g. separated particles of fibers of the second material alone; these particles typically have a main dimension between 1 μm and 100 μm, preferably from 5 μm to 50 μm.
c) particles comprising both the first material and the second material, e.g. aggregates containing the two polymers still partially linked together; these particles typically have a main dimension between 15 μm and 5 mm, preferably from 0.1 mm to 2 mm

It is not necessary that there is a complete disaggregation of the first material from the second material in the step (ii) of the invention.

The impact pressure waves may be generated by an apparatus as described for example in EP 1 554 044.

The general operating principle of such an apparatus is based on the use of two counter rotating impeller wheels, which generate by their fast rotation extreme air oscillation and negative pressures. This air current takes the multi-material particles, such as fibers or balls of fibers (tangled fibers), through a rotor so that the multi-materials of the particles are torn apart by the negative pressure impact and the different materials can be separated from each other.

In one embodiment of the invention, it is preferred, that in process step (ii) the length of the fibers (particles) remains unchanged.

Furthermore, it is preferred that the micronized particles of the invention are subjected to impact pressure waves from a broad frequency spectrum and a pulse duration of less than 10 μs. The detaching and/or disaggregation of the particles occurs due to the effect of the impact pressure waves striking the particles in quick succession at supersonic speed. The impact pressure waves are generated by bodies having an aerodynamically shaped profile and surface, which are accelerated to the so-called transonic range. With these, impact pressure fronts are generated, which detach and/or disaggregated the particles. If the relative speed of the air or a protective gas, such as nitrogen or argon, which flows against the shaped bodies is just below sound velocity, the flow speed can in part reach supersonic speed relative to the shaped bodies. The speed range below sound velocity at which the air flowing around the shaped bodies in part has supersonic speed is called the transonic speed range in the literature (Sigloch: Technische Fluidmechanik, VDI Publishing, 1996). Depending on the shape of the aerodynamically shaped bodies, the transonic speed range commences at 0.75 to 0.85 Mach and terminates when the shaped bodies attains sound velocity with regard to the air/protective gas flowing it.

If the speed of the air flowing against to the shaped bodies is in the transonic speed range, supersonic speed relative to the aerodynamic profile of the shaped bodies occurs in a zone. This zone of the air flowing supersonically relative to the shaped bodies is limited by a forward front, a rear front, and the profile of the shaped bodies. A transition from supersonic speed to normal speed takes place on the rear front. This transition is accompanied by an impact pressure front, i.e. air pressure rises to a multiple of normal pressure and the returns to normal pressure after a brief low pressure phase. These effects are adequately known in the development of support surface profiles for supersonic aircraft.

The use of the impact pressure front is very efficient due to two factors. First, the impact pressure front is very brief pulse with a build-up time of a few μs. Second, the immediate succession of pressure increase and pressure decrease is very effective in terms of mechanically stressing the particles which should be detached and/or disaggregated. In term of spectrum, the pressure impact can be understood as the sum or pressure waves of very different frequencies.

In one embodiment of the invention, it is preferred that the impact pressure fronts generated by the impact pressure waves have a pulse duration of 10 μs and a repetition rate of greater than 8 kHz.

In a preferred embodiment of the invention, the impact pressure waves and thus the impact pressure fronts are generated by an apparatus comprising:

a) two discs drives equipped with molded parts and rotating in opposite directions by two motors,
b) a filling orifice, provided close to the center of the apparatus, for the micronized particles to be detached and/or disaggregated,
c) an outlet for the detached and/or disaggregated fine particles.

It is further preferred that the molded parts have an aerodynamically shaped profile, i.e. the surface of the molded parts is constructed as a subcritical profile, so the circumfluent flow is substantially laminar and thus, the impact pressure waves can be generated.

By using such an apparatus, it is possible to configure the drive of molded parts arranged on the two disc drives such that the molded parts move at a speed that is just below the speed sound and the air flowing around the molded parts partially reaches supersonic speed, this range being limited at the back by an impact pressure front.

Preferably, the relative speed of the air flowing against the molded parts is from 0.75 to 1 Mach, preferably not more than 0.85 Mach.

The rotating frequency of the two discs drives is preferably between 50 and 400 Hz, more preferably between 100 and 350 Hz, even more preferably between 150 and 300 Hz, most preferably between 200 and 250 Hz.

As mentioned above, such an apparatus is described for example in

EP 1554 044 and commercially available by Krause Maschinenbau GmbH. The Ecopulser® or Nanofractor® of Krause Maschinenbau GbmH is usually used for mineral granules fragmentation into micro-sizes particles or even for wood chips fragmentation.

In one preferred embodiment of the invention the particles pass through the apparatus as described above just one time, preferably not more than three times, more preferably not more than two times in terms of the desired detaching and/or disaggregating. The described apparatus preferably works continuously.

In particular, the inventors of the invention have found out that by using impact pressure waves as described above, the coating material and/or sticking materials can be easily separated from the main polymeric material of the micronized multi-material particles and the dimension of the micronized particles (fibers) remains unchanged.

Furthermore, process step (ii) of the invention can be carried out with very low temperature build up.

It is preferred that the temperature in process step (ii) of the invention is below the melting point of the micronized particles, more preferably below the glass transition temperature of the micronized particles, even more preferably below 70 °C, most preferably below 65 °C. In a most preferred embodiment the temperature is at room temperature.

The fine particles obtained in step (ii) of the invention are further separated in order to obtain pure polymer particles, i.e. particles that substantially consists of one type of polymer. It is preferred that the separated pure particles have a purity of at least 98 %, preferably of at least 98.4 %, more preferably of at least 99 %.

This further separation step, i.e. process step (iii) of the invention, is based on the difference in density and/or size of the fine particles obtained in step (ii) of the invention. Every method known in the prior art which is suitable to separate particles based on these differences is suitable for the invention. However, it is preferred that the fine particles are separated by a method selected from the group consisting of sieving (such as vibration, gyratory etc.), centrifugal sieving, air flow separation, triboelectric or electrostatic separation method and combinations thereof. It is more preferred that the separation method is an air flow separation or a triboelectric/electrostatic separation method. It is further preferred that in step (iii) of the invention more than one, in particular two, separation methods are used. If more than one separation method are used in step (iii) of the invention the separation methods are used in series to enhance recovery yield of separated pure polymer particles.

In case the separation method is air flow separation method, according to the invention, it is preferred that a separator (classifier) is used, wherein an air flow is tangentially fed at the bottom of a conical or cylindrical vessel so as to have an ascending flow with a high peripheral speed. This flow conveys particles to the top of the vessel where one or several rotating cylindrical wheel(s) allow the air to go out of the classifier. The wheel's geometry combined to its rotating velocity allows only a certain fraction of the particles (fibers) - the finest one and/or lightest one- to pass through and to be collected in a downstream gas-solid separator (e.g. filter or cyclone or both of them) in which material can be recovered. The coarse and/or more dense (for example coated fibers) particle fraction is not able to go through the wheel, after its kinetic energy decreases, particles finally drop at the center of the classifier into a recovery vessel.

Various air classifiers (separators) are known in the art and which are suitable to use them in step (iii) of the invention. The specific type of air classifier used in step (iii) of the invention can be selected by a person skilled in the art according to the requirements to separate the fine particles. The same applies to the operation conditions.

Suitable separators are commercially available from Hosokawa Micron Lts, Netzsch GmbH & Co. Holding KG or Poittemill Forplex. A specific air classifier which may be used in the invention is for example the Hosokawa ATP 50 classifier equipped with a cyclone and a bag filter for gas solid separation.

With respect of the operation conditions, in one embodiment of the invention it is preferred that the rotating speed is between 3500 and 4500 rpm, more preferably between 3800 and 4200 rpm, even more preferred the rotating speed is 4000 rpm.

Additionally, the feeding flow rate is preferably between 10 and 30 g/min, more preferably between 12 and 25 g/min, even more preferably the feeding flow rate is between 15 and 20 g/min.

It is further preferred that the air flow is between 35 and 70 $m^3$/h, more preferred between 40 and 60 $m^3$/h, even more preferred between 45 and 50 $m^3$/h.

In case in step (iii) of the invention the fine particles are separated by using a triboelectric/electrostatic separation method, the classifier used in such a method needs a specific configuration that is commercially available as designed for abrasive materials, i.e. the fine particles are transported in dry gas, such as air and/or nitrogen flow, the classifier walls are coated with an insulating elastomer material, such as for example the polyurethane Vulkollan® or Urepan®, and the wheels is done is ceramic. During separation, particles can get charged by friction in air so that electrostatic agglomeration of a material is possible and this material can be separated from another one by size even if coarser particles (generated by electrostatic agglomeration) have a lighter density. With this process, depending on the materials that have to be separated, desired enriched fraction of one material (for example: virgin Polyamide fibers) could be either separated as the fine particle fraction (separated from coated fibers with agglomerated silicon rubber nodules) or as the coarse particles fraction (separated from fine free silicon rubber nodules) with a low effect of materials density.

A suitable dry triboelectric separation method and an apparatus therefor is described for example in the scientific publication of M.J. Pearse and T.J. Hicky, Resource Recovery and Conservation, 3 (1978), pages 179-190.

By using the process of the invention as described above a recovery yield of pure particles can be achieved which is preferably at least 95 %, more preferably at least 97 %, even more preferred at least 99 %.

The process of the invention can be carried out without the use of water and/or chemical treatments.

The obtained particles can be further used for example they can be recompacted, regranulated, recompounded and/or recycled.

The invention will now be further described by the following examples, which are, however, not to be understood in a limiting sense.

## Examples

In all examples, i.e. examples according to the invention and comparative examples, as described below, airbags based on polyamide 66 coated on face with crosslinked silicone were used. The content of silicone was 10% by weight. The airbags were industrial waste. Furthermore, in all examples process step (i) of the invention, i.e. micronization, was carried out to obtain micronized particles.

### Micronization

The airbags were cut up with an industrial shredder device and then micronized in a cutter mill to obtain airbag micronized fibers as described in EP 3 501 775. In particular, the airbags were:

- first, cut in pieces from 20 to 80 cm
- Secondly, cut in small pieces square shaped of 2x2 cm by blade cutting
- Thirdly, micronized in short fibers by a micronizer with a row of stationary knives and a row of moving knives and a screen

The residual product was composed of

- Separated fibers of polyamide with a length between 0.1 to 1.5 mm,
- Separated particles of the coating material (silicone) from 15 to 200 $\mu$m
- Aggregates of fiber and silicone from 15 $\mu$m to 2 mm

The size of these particles was measured by optical microscopy and by laser diffraction measurement. The particles exhibited a median diameter D50 from 108 to 141$\mu$m.

### Separation

Three examples were carried out, wherein different separation methods for separating the micronized particles were used.

In Example A, which is a comparative example, the separation of the particles were carried with a process according to EP 3 501 775.

Example B is an example according to the invention, wherein the micronized particles are detached and disaggregated according to step (ii) of the invention and afterwards the obtained fine particles are separated by using an air flow separation method.

In Example C, which is also a comparative example, the micronized particles were separated by using to air flow separation methods in series but without using step (ii) of the invention, i.e. a fragmentation technology that breaks the different bounded materials of the objects.

In the following the examples are described in detail and their results are summarized in Tables 1 and 2.

### Example A (comparative)

Polyamide airbag wastes have been shredded and micronized as described above to obtain micronized fibers, and subsequently the micronized fibers were treated by caustic soda according EP 3 501 775. The yield of enriched polyamide recovery was 93.76 % by weight.

**Example B** (inventive)

Polyamide airbag wastes have been shredded and micronized as described above to obtain micronized fibers.
These micronized fibers were transformed in a lab Nanofractor technology at Krause Maschinenbau GmbH, Ostermunchen, as described in EP 1 554 044.
650 g of fibers were prepared with a rotating frequency of 200 Hz. Around 630 g fibers were collected after treatment.
From this 630 g, 97 g were separated with a Hosokawa ATP50 classifier equipped with a cyclone and then a bag filter for Gas Solid separation. ATP 50 is running with a rotating speed of 4000 rpm, a feeding flow rate of approximately 15 g/min and an airflow of around 45 $m^3$/h for air flow.
In a first bin out of the classifier 89 g of polyamide with an ash content measured at 0.94 % and in the other bin 4 g of a polyamide were collected.
The yield of enriched polyamide recovery was 99.77 % by weight.

**Example C** (comparative)

Polyamide airbag wastes have been shredded and micronized as described above to obtain micronized fibers.
From this, 820 g of micronized fibers containing an average amount of 3.27 % of ashes are separated in a Hosokawa ATP50 classifier equipped with a cyclone and then a bag filter for Gas Solid separation. ATP 50 is running with a rotating speed of 4000 rpm, a feeding flow rate of approximately 24 g/min and an airflow of around 45 $m^3$/h. In a first bin out of the classifier 686 g of powder with an ash ratio measured at 3.20 % were collected. In the other bin out of the cyclone, 134 g of polyamide fibers with an ash content measured at 0.81 % were collected. Fibers in the bin out of the filter were not collected.
From this trial, 150 g of fibers with an ash content of 3.20 % were separated in a second step with an ATP50 classifier with a rotating classifier wheel speed of 4000rpm, an airflow of 45 $m^3$/h and a feeding flow rate of around 15 g/min was performed.
In the classifier bin around 100 g of polymer with a ash content of 4.7 % and in a second bin out of the cyclone, 50 g of polymer with a ash content of 0.97 % were collected. From powder collected in cyclon of the first and second separation step a yield (w/w) of enriched polyamide recovery from wastes of 45.48 % was assessed.

Table 1

| For 100 kg of inlet AB | Poly-amide in initial AB (%) | Silicone in initial AB (%) | Re-covered PA fraction (kg) | Poly-amide in heavy phase (%) | Silicone impurity in the heavy phase recovered PA fraction (%) | pure PA re-cover ed (kg) | Silicone impurity in PA phase (kg) |
|---|---|---|---|---|---|---|---|
| **Example A** comparative | 94.4 | 5.6 | 90.0 | 98.30 | 1.70 | 88.5 | 1.53 |
| **Example B** inventive | 94.4 | 5.6 | 95.7 | 98.38 | 1.62 | 94.1 | 1.55 |
| **Example C** comparative | 94.4 | 5.6 | 45.5 | 98.43 | 1.57 | 41.1 | 2.46 |

Table 2

| Results | Yield of PA recovery from airbags (kg of recovered pure) (%) | Separated Silicone waste fraction (kg) | *Pure silicone in the light phase (silicone rich phase) (kg)* | *Pure PA in the silicone waste (kg)* | PA impurity in the separated silicone waste (%) | Yield of silicone washing (%) |
|---|---|---|---|---|---|---|
| **Example A** comparative | 93.76 | 10.0 | *4.1* | *5.89* | 58.9 | 72.9 |
| **Example B** inventive | 99.77 | 4.3 | *4.1* | *0.21* | 5.0 | 72.5 |
| **Example C** comparative | 45.48 | 56.4 | *3.2* | *53.22* | 91.2 | 87.9 |

As can be seen from the examples, the process of the invention provides improved yields of the polyamide recovery. There is no need of water or chemical solutions. There is less consumption of energy, since no drying process for removing water is necessary.

**Claims**

1. A process for treating an object comprising a first material and a second material bound to the first material, wherein the density of the first material is different from the density of the second material, said process comprising the following steps:

   (i) physically treating the object to obtain micronized particles,
   (ii) detaching and/or disaggregating the micronized particle obtained in process step (i) from each other into fine particles by subjecting the micronized particles to impact pressure waves,
   (iii) physically separating the fine particles obtained in process step (ii) due to their difference in density and/or particle size.

2. The process of claim 1, wherein the object is selected from the group consisting of fibers, woven fabrics, nonwoven fabrics, extruded molded articles, and blow molded articles.

3. The process of claim 1 or 2, wherein the density of the first material (pA) and the density of the second material (pB) are such that they fulfil the following condition:

$$\frac{2*|\rho A - \rho B|}{(\rho A + \rho B)} > 0.03,$$

4. The process of any one of the preceding claims, wherein the object comprises at least two layers or at least two different components.

5. The process of any one of the preceding claims, wherein the first material is a thermoplastic polymer, preferably a polyamide.

6. The process of any one of the preceding claims, wherein the second material is a material selected from the group consisting of silicones, polyurethanes and fluorinated polymers.

7. The process of any one of the preceding claims, wherein step (i) further comprises cutting the object into pieces and then micronizing the pieces.

8. The process of any one of the preceding claims, wherein the micronized particles obtained in step (i) have a particle size distribution **characterized by** a d50 value in the range from 15 microns to 5 mm

9.  The process of any of the preceding claims, wherein the fine particles obtained in step (ii) comprises at least three kinds of particles

a) particles substantially consisting of the first material and having a main dimension between 15 $\mu$m and 5 mm
b) particles substantially consisting of the second material and having a main dimension between 1 $\mu$m and 100 $\mu$m.
c) particles comprising both the first material and the second material, and having a main dimension between 15 $\mu$m and 5 mm

10. The process of any of the preceding claims, wherein the impact pressure waves used in step (ii) generates impact pressure fronts which have a pulse duration of 10 $\mu$s and a repetition rate of greater than 8 kHz.

11. The process of any one of the preceding claims, wherein is step (ii) an apparatus is used comprising

a) two disc drives equipped with molded parts and rotating in opposite directions by two motors,
b) a filling orifice, provided close to the center of the apparatus, for the micronized particles to be detached and/or disaggregated,
c) an outlet for the detached and/or disaggregated fine particles.

12. The process of claim 11, wherein the molded parts have an aerodynamically shaped profile.

13. The process of claim 11 or 12, wherein the rotation frequency of the disc drivers is between 50 and 400 Hz.

14. The process of any of the preceding claims, wherein step (iii) is carried by using a separation method selected from the group consisting of sieving, centrifugal sieving, air flow separation, triboelectric or electrostatic separation, and combinations thereof.

15. Use of an apparatus as defined in claims 11 or 12 for detaching and/or disaggregating micronized particles from each other, wherein the micronized particles are particles comprising at least two polymer materials, which have different densities.

Europäisches
Patentamt

European
Patent Office

Office européen
des brevets

# EUROPEAN SEARCH REPORT

Application Number

EP 20 30 5085

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2007/073230 A1 (GUBANOVA GALINA IGOREVNA [RU]; CHEPULIS ALEKSANDRAS [LT]) 28 June 2007 (2007-06-28) * abstract * ----- | 1-15 | INV. B29B17/04 |
| A | EP 1 554 044 A1 (KRAUSE HILGER MASCHB GMBH [DE]) 20 July 2005 (2005-07-20) * the whole document * * ----- | 1-15 | |
| A | EP 3 501 775 A1 (RHODIA OPERATIONS [FR]) 26 June 2019 (2019-06-26) * claims * ----- | 1-15 | |
| | | | TECHNICAL FIELDS SEARCHED (IPC) |
| | | | B29B C08J |

The present search report has been drawn up for all claims

| Place of search | Date of completion of the search | Examiner |
|---|---|---|
| The Hague | 2 July 2020 | Niaounakis, Michael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 30 5085

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2020

| Patent document cited in search report | | Publication date | Patent family member(s) | | Publication date |
|---|---|---|---|---|---|
| WO 2007073230 | A1 | 28-06-2007 | NONE | | |
| EP 1554044 | A1 | 20-07-2005 | AT | 421382 T | 15-02-2009 |
| | | | BR | 0314879 A | 16-08-2005 |
| | | | BR | PI0314879 B1 | 06-02-2018 |
| | | | CA | 2518680 A1 | 06-05-2004 |
| | | | CY | 1110314 T1 | 14-01-2015 |
| | | | DK | 1554044 T3 | 11-05-2009 |
| | | | EP | 1554044 A1 | 20-07-2005 |
| | | | ES | 2321188 T3 | 03-06-2009 |
| | | | HK | 1080418 A1 | 02-09-2011 |
| | | | PT | 1554044 E | 22-04-2009 |
| | | | SI | 1554044 T1 | 30-06-2009 |
| | | | US | 2005253000 A1 | 17-11-2005 |
| | | | US | 2009084877 A1 | 02-04-2009 |
| | | | WO | 2004037425 A1 | 06-05-2004 |
| EP 3501775 | A1 | 26-06-2019 | EP | 3501775 A1 | 26-06-2019 |
| | | | WO | 2019122145 A1 | 27-06-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3501775 A

- EP 1554044 A

**Non-patent literature cited in the description**

- **M.J. PEARSE ; T.J. HICKY.** *Resource Recovery and Conservation,* 1978, vol. 3, 179-190

- **SIGLOCH.** Technische Fluidmechanik. VDI Publishing, 1996